(19) Europäisches Patentamt
European Patent Office
Office européen des brevets

(11) **EP 4 137 532 A1**

(12) **EUROPEAN PATENT APPLICATION**
published in accordance with Art. 153(4) EPC

(43) Date of publication:
**22.02.2023 Bulletin 2023/08**

(21) Application number: **21803804.0**

(22) Date of filing: **10.05.2021**

(51) International Patent Classification (IPC):
**C08J 3/12** $^{(2006.01)}$         **C08K 5/20** $^{(2006.01)}$
**C08L 23/00** $^{(2006.01)}$

(52) Cooperative Patent Classification (CPC):
**C08J 3/12; C08K 5/20; C08L 23/00**

(86) International application number:
**PCT/JP2021/017703**

(87) International publication number:
**WO 2021/230200 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2020   JP 2020084463**

(71) Applicant: **SUMITOMO CHEMICAL COMPANY, LIMITED**
**Tokyo 103-6020 (JP)**

(72) Inventor: **KAMAHARA, Takashi**
**Ichihara-shi, Chiba 299-0195 (JP)**

(74) Representative: **Winter, Brandl - Partnerschaft mbB**
**Alois-Steinecker-Straße 22**
**85354 Freising (DE)**

(54) **POLYOLEFIN-BASED RESIN PELLET AND METHOD FOR PRODUCING SAME**

(57)     An object of the present invention is to provide a polyolefin-based resin pellet with less generation of fine powder.
     The polyolefin-based resin pellet containing: a polyolefin-based resin; an erucic acid amide; and a fatty acid amide having 20 or less carbon atoms, in which a content of the fatty acid amide having 20 or less carbon atoms is 1% to 6% by mass with respect to 100 % by mass of a total amount of the erucic acid amide and the fatty acid amide having 20 or less carbon atoms.

## Description

### Technical Field

The present invention relates to a polyolefin-based resin pellet and a method for producing a polyolefin-based resin pellet.

### Background Art

Polyolefin-based resins are used as materials for packaging such as plastic bags because of their durability and ease of handling, and such materials for packaging are produced by extrusion-molding a polyolefin-based resin film.

As a characteristic demanded for the polyolefin-based resin film, there are sliding properties, and when the sliding properties are poor, this causes problems that wound films stick to each other and do not peel off, or films stick to an extruder and do not peel off when extrusion-molding the films.

Therefore, in order to improve the sliding properties of a polyolefin-based resin film, it has long been practiced to add a lubricant to the polyolefin-based resin which is the material of the film. For example, in the method of Patent Literature 1, an organic fatty acid amide-based lubricant is used.

### Citation List

### Patent Literature

[Patent Literature 1] Japanese Unexamined Patent Application Publication No. 2001-72810

## Summary of Invention

### Technical Problem

A polyolefin-based resin film is produced by performing a molding process of polyolefin-based resin pellets to form them into a film.

Resin pellets can be obtained by melt-kneading a resin and extrusion-molding. A lubricant that improves the sliding properties of the film can be added when melt-kneading the resin.

However, the inventor of the present invention found that when using an erucic acid amide, which is an organic fatty acid amide, as a lubricant, the produced resin pellets are easily chipped, and fine powder is generated from the chipped resin pellet fragments. When using resin pellets to which or with which such fine powder is adhered or mixed, this causes a problem of deterioration in the subsequent molding processability.

Therefore, an object of the present invention is to provide a polyolefin-based resin pellet with less generation of fine powder.

### Solution to Problem

As a result of diligent research, the inventor of the present invention found that in a polyolefin-based resin pellet containing an erucic acid amide and a fatty acid amide having 20 or less carbon atoms in a specific ratio, the generation of fine powder is reduced, and thereby completed the present invention.

That is, the present invention is as follows.

[1] A polyolefin-based resin pellet comprising: a polyolefin-based resin; an erucic acid amide; and a fatty acid amide having 20 or less carbon atoms,
wherein a content of the fatty acid amide having 20 or less carbon atoms is 1% to 6% by mass with respect to 100 % by mass of a total amount of the erucic acid amide and the fatty acid amide having 20 or less carbon atoms.
[2] The pellet according to [1], wherein the polyolefin-based resin is one or more selected from a polyethylene-based resin and a polypropylene-based resin.
[3] The pellet according to [1] or [2], wherein the fatty acid amide having 20 or less carbon atoms contains both an unsaturated fatty acid amide and a saturated fatty acid amide.
[4] The pellet according to [3], wherein a content of the unsaturated fatty acid amide contained in the fatty acid amide having 20 or less carbon atoms with respect to a content of the saturated fatty acid amide contained in the fatty acid amide having 20 or less carbon atoms is 2 to 6.
[5] The pellet according to any one of [1] to [4], wherein a content of an unsaturated fatty acid amide having 20 or less carbon atoms is 1.0% to 6.0% by mass with respect to 100 % by mass of the total amount of the erucic acid amide and the fatty acid amide having 20 or less carbon atoms.

[6] The pellet according to any one of [3] to [5], wherein the unsaturated fatty acid amide is a mono-unsaturated fatty acid amide.

[7] The pellet according to any one of [3] to [6], wherein the unsaturated fatty acid amide is one or more selected from an oleic acid amide and a gadoleic acid amide.

[8] The pellet according to any one of [1] to [7], wherein a content of a saturated fatty acid amide having 20 or less carbon atoms is 0.3% to 1.0% by mass with respect to 100 % by mass of the total amount of the erucic acid amide and the fatty acid amide having 20 or less carbon atoms.

[9] The pellet according to any one of [3] to [8], in which the saturated fatty acid amide is one or two or more selected from the group consisting of a decanoic acid amide, a palmitic acid amide, a stearic acid amide, and an arachidic acid amide.

[10] The pellet according to any one of [1] to [9], further containing a fatty acid amide having 22 or more carbon atoms other than the erucic acid amide.

[11] The pellet according to [10], in which the fatty acid amide having 22 or more carbon atoms is one or two or more selected from the group consisting of a behenic acid amide, a selacholeic acid amide, and a lignoceric acid amide.

[12] A method for producing the polyolefin-based resin pellet according to any one of [1] to [11], the method including:

a step of mixing a polyolefin-based resin and a lubricant to obtain a mixture; and
a step of melt-extruding the mixture to obtain a resin pellet,
wherein the lubricant contains an erucic acid amide, and a fatty acid amide having 20 or less carbon atoms, and a content of the fatty acid amide having 20 or less carbon atoms is 1% to 6% by mass with respect to 100% by mass of a total amount of the erucic acid amide and the fatty acid amide having 20 or less carbon atoms .

**Advantageous Effects of Invention**

According to the present invention, a polyolefin-based resin pellet with less generation of fine powder is provided.

**Description of Embodiments**

<Polyolefin-based resin pellet>

Hereinafter, a polyolefin-based resin pellet according to the present embodiment will be described in detail. The polyolefin-based resin pellet according to the present embodiment comprises a polyolefin-based resin; an erucic acid amide; and a fatty acid amide having 20 or less carbon atoms.

(Polyolefin-based resin)

The polyolefin-based resin contained in the polyolefin-based resin pellet according to the present embodiment is not particularly limited as long as it is a resin containing a polymer polymerized with olefins as a monomer, and examples thereof include a polyethylene-based resin and a polypropylene-based resin.

(Polyethylene-based resin)

The polyethylene-based resin contains an ethylene-based polymer. Examples of the ethylene-based polymer include ethylene homopolymers, copolymers of ethylene and $\alpha$-olefins, and copolymers of ethylene and $\alpha$-olefins substituted with an alicyclic compound.

Examples of the ethylene homopolymers include high-pressure-processed low-density polyethylene (LDPE) having the density of 910 to 935 kg/m$^3$ in which ethylene as a repeating unit randomly bonded with a branched structure by high-pressure radical polymerization using a radical initiator.

Examples of the copolymers of ethylene and $\alpha$-olefins include linear low-density polyethylene having crystallinity, and an elastomer of a copolymer of an $\alpha$-olefin and ethylene having low crystallinity and rubber-like elasticity characteristics.

The density of the linear low-density polyethylene can be 900 to 940 kg/m$^3$, and the density of the elastomer of the copolymer of an $\alpha$-olefin and ethylene can be 860 to 900 kg/m$^3$.

Examples of the $\alpha$-olefins include $\alpha$-olefins having 3 to 10 carbon atoms, and examples of the $\alpha$-olefins having 3 to 10 carbon atoms include propylene, 1-butene, 1-pentene, 1-hexene, 4-methyl-1-pentene, 1-octene, 1-decene, and 3-methyl-1-butene, but α-olefins having 4 to 10 carbon atoms are preferable, and 1-butene, 1-hexene, or 1-octene is more preferable.

Example of the α-olefins substituted with an alicyclic compound include vinylcyclohexane.

The amount of the structural unit derived from an α-olefin occupying the ethylene-based polymer can be 4.0% to 20% by mass.

Specific examples of the copolymers of ethylene and α-olefins include an ethylene-1-butene copolymer, an ethylene-1-hexene copolymer, an ethylene-1-octene copolymer, an ethylene-1-decene copolymer, an ethylene-(3-methyl-1-butene) copolymer, which may be one type alone or may be a mixture of two or more types. Furthermore, the ethylene-based polymer may be a mixture of an ethylene homopolymer and a copolymer of ethylene and α-olefins.

The melt flow rate of the ethylene-based polymer measured at the measurement temperature of 190°C and the load of 2.16 kg can be 0.5 to 50 g/10 minutes, and it is preferably 1 to 30 g/10 minutes, and more preferably 1 to 20 g/10 minutes.

The ethylene-based polymer can be produced by a known polymerization method using a known polymerization catalyst.

Examples of the polymerization catalyst include a homogeneous catalytic system typified by a metallocene catalyst, a Ziegler-type catalytic system, and a Ziegler-Natta-type catalytic system. Examples of the homogeneous catalytic systems include; a catalytic system composed of an alkylaluminoxane, and a transition metal compound of Group 4 of the periodic table having a cyclopentadienyl ring; a catalytic system composed of a transition metal compound of Group 4 of the periodic table having a cyclopentadienyl ring, a compound that reacts therewith to form an ionic complex, and an organoaluminum compound; and a catalytic system in which catalytic components such as a transition metal compound of Group 4 of the periodic table having a cyclopentadienyl ring, a compound that forms an ionic complex, and an organoaluminum compound are supported on inorganic particles such as silica and clay minerals and modified; and examples thereof further include prepolymerization catalytic systems prepared by prepolymerizing ethylene or an α-olefin in the presence of the above-mentioned catalytic system.

Furthermore, the high-pressure-processed low-density polyethylene (LDPE) can be produced by using a radical initiator as a polymerization catalyst.

(Polypropylene-based resin)

The polypropylene-based resin contains a propylene-based polymer. Examples of the propylene-based polymer include propylene homopolymers; and copolymers of ethylene and/or an α-olefin having 4 to 10 carbon atoms, and propylene.

The melt flow rate of the propylene homopolymer measured at the measurement temperature of 230°C and the load of 2.16 kg can be 0.1 to 50 g/10 minutes.

The melt flow rate (MFR) of the copolymer of ethylene and/or an α-olefin having 4 to 10 carbon atoms, and propylene measured at the measurement temperature of 230°C and the load of 2.16 kg is 10 to 200 g/10 minutes.

When the total mass of the copolymer of ethylene and/or an α-olefin having 4 to 10 carbon atoms, and propylene is 100% by mass, the structural unit derived from ethylene and/or an α-olefin having 4 to 10 carbon atoms can be 0.1% to 40% by weight, and the structural unit derived from propylene can be 99.9% to 60% by weight.

In the present specification, the "structural unit" in the phrase such as "structural unit derived from ethylene" means a polymerization unit of a monomer. Accordingly, the "structural unit derived from ethylene" means a structural unit of $-CH_2CH_2-$, for example.

Examples of the α-olefin having 4 to 10 carbon atoms include 1-butene, 1-pentene, 1-hexene, 4-methyl-1-pentene, 1-octene, and 1-decene, where 1-butene, 1-hexene, or 1-octene is preferable.

Specific examples of the copolymer of ethylene and/or an α-olefin having 4 to 10 carbon atoms, and propylene include a random copolymer of propylene and ethylene, a random copolymer of propylene and an α-olefin having 4 to 10 carbon atoms, a random copolymer of propylene and ethylene and an α-olefin having 4 to 10 carbon atoms, and a propylene block copolymer, and these may be one type alone or may be a mixture of two or more two or more types. Furthermore, the propylene-based polymer may be a mixture of a propylene homopolymer, and a copolymer of ethylene and/or an α-olefin having 4 to 10 carbon atoms, and propylene.

Examples of the random copolymer of propylene and an α-olefin having 4 to 10 carbon atoms include a propylene-1-butene random copolymer, a propylene-1-hexene random copolymer, a propylene-1-octene random copolymer, and a propylene-1-decene random copolymer.

Examples of the random copolymer of propylene and ethylene and an α-olefin having 4 to 10 carbon atoms include a propyleneethylene-1-butene copolymer, a propylene-ethylene-1-hexene copolymer, propylene-ethylene-1-octene copolymer, and a propyleneethylene-1-decene copolymer.

The propylene-based polymer can be produced by a known polymerization method using a known olefin polymerization catalyst.

Examples of the polymerization catalyst include a Ziegler-type catalytic system; a Ziegler-Natta-type catalytic system; a catalytic system composed of an alkylaluminoxane, and a transition metal compound of Group 4 of the periodic table having a cyclopentadienyl ring; a catalytic system composed of a transition metal compound of Group 4 of the periodic table having a cyclopentadienyl ring, a compound that reacts therewith to form an ionic complex, and an organoaluminum compound; and a catalytic system in which catalytic components such as a transition metal compound of Group 4 of the periodic table having a cyclopentadienyl ring, a compound that forms an ionic complex, and an organoaluminum compound are supported on inorganic particles such as silica and clay minerals and modified; and furthermore, a prepolymerization catalytic system prepared by prepolymerizing ethylene or an $\alpha$-olefin in the presence of the above-mentioned catalytic system may be used.

The content of the polyolefin-based resin contained in the resin pellet according to the present embodiment is preferably 98% to 99.9% by mass, and preferably 99.0% to 99.9% by mass with respect to 100% by mass of the entire resin pellets from the viewpoint of performing a molding process on the pellets for various usages.

(Lubricant)

The resin pellet according to the present embodiment further comprises an erucic acid amide and a fatty acid amide having 20 or less carbon atoms. The erucic acid amide and the fatty acid amide having 20 or less carbon atoms can be added as a lubricant in the production of the resin pellet, and when the resin pellet contains the erucic acid amide and the fatty acid amide having 20 or less carbon atoms, the sliding properties of a film produced from the resin pellets becomes excellent.

The total amount of the erucic acid amide and the fatty acid amide having 20 or less carbon atoms in the polyolefin-based resin pellet is preferably 200 to 10000 mass ppm, is preferably 400 to 4000 mass ppm, and more preferably 500 to 2300 mass ppm with respect to 100% by mass of the amount of the polyolefin-based resin contained in the resin pellet. When the total amount of the erucic acid amide and the fatty acid amide having 20 or less carbon atoms is in the above-mentioned range, the sliding properties of the film produced from the resin pellets is further improved.

(Erucic acid amide)

The erucic acid amide is an organic fatty acid amide having a chemical formula $CH_3(CH_2)_7CH=CH(CH_2)_{11}CONH_2$, and having one unsaturated bond and having 22 carbon atoms.

The content of the erucic acid amide in the polyolefin-based resin pellet is preferably 200 to 10000 mass ppm, is preferably 400 to 4000 mass ppm, and more preferably 500 to 2300 mass ppm with respect to 100% by mass of the amount of the polyolefin-based resin contained in the resin pellet. When the content of the erucic acid amide is in the above-mentioned range, the sliding properties of the film produced from the resin pellets is further improved.

(Fatty acid amide having 20 or less carbon atoms)

In the polyolefin-based resin pellet according to the present embodiment, the content of the fatty acid amide having 20 or less carbon atoms is 1% to 6% by mass with respect to 100% by mass of the total amount of the erucic acid amide and the fatty acid amide having 20 or less carbon atoms. When the content of the fatty acid amide having 20 or less carbon atoms is in the above-mentioned range, the generation of fine powder from the resin pellets is reduced.

From the viewpoint of improving the sliding properties of the film produced from the resin pellets, the lower limit value of the content of the fatty acid amide having 20 or less carbon atoms is preferably 1.1% by mass or more, more preferably 1.2% by mass or more, and further preferably 1.3% by mass or more with respect to 100% by mass of the total amount of the erucic acid amide and the fatty acid amide having 20 or less carbon atoms. Furthermore, from the viewpoint of reducing the generation of fine powder from the resin pellets, the upper limit value of the content of the fatty acid amide having 20 or less carbon atoms is preferably 6% by mass or less, more preferably 5% by mass or less, and further preferably 4% by mass or less with respect to 100% by mass of the total amount of the erucic acid amide and the fatty acid amide having 20 or less carbon atoms. As the range, the content of the fatty acid amide having 20 or less carbon atoms is 1% to 6% by mass, more preferably 1.2% to 5% by mass, and further preferably 1.5% to 4% by mass with respect to 100% by mass of the total amount of the erucic acid amide and the fatty acid amide having 20 or less carbon atoms.

In the fatty acid amide having 20 or less carbon atoms, the number of carbon atoms constituting the fatty acid may be 20 or less, but the number of carbon atoms constituting the fatty acid is preferably 8 or more, and is more preferably 10 or more. Furthermore, the fatty acid amide having 20 or less carbon atoms may be one kind of fatty acid amide or a plurality of types of fatty acid amides, but a plurality of types of fatty acid amides are preferable.

The fatty acid amide having 20 or less carbon atoms may be an unsaturated fatty acid amide or a saturated fatty acid amide. It is preferable that both an unsaturated fatty acid amide and a saturated fatty acid amide be contained as the fatty acid amide having 20 or less carbon atoms from the viewpoint of preventing the generation of fine powder of the resin pellets.

When both the unsaturated fatty acid amide and the saturated fatty acid amide are contained as the fatty acid amide having 20 or less carbon atoms, it is preferable to adjust the content ratio of the unsaturated fatty acid amide and the saturated fatty acid amide. The content of the unsaturated fatty acid amide contained in the fatty acid amide having 20 or less carbon atoms with respect to the content of the saturated fatty acid amide contained in the fatty acid amide having 20 or less carbon atoms is preferably 2 to 6. When the unsaturated fatty acid amide having 20 or less carbon atoms is contained in the above-mentioned range with respect to the saturated fatty acid amide having 20 or less carbon atoms, the generation of fine powder of the resin pellets can be further suppressed. The content of the unsaturated fatty acid amide with respect to the content of the saturated fatty acid amide is more preferably 2 to 5, and further preferably 2 to 4. The content of the unsaturated fatty acid amide with respect to the content of the saturated fatty acid amide can be 3 to 6.

Furthermore, the content of the unsaturated fatty acid amide having 20 or less carbon atoms is preferably 1.0% to 6.0% by mass, more preferably 1.0% to 4.0% by mass, and further preferably 1.0% to 2.0% by mass with respect to 100% by mass of the total amount of the erucic acid amide and the fatty acid amide having 20 or less carbon atoms. When the unsaturated fatty acid amide having 20 or less carbon atoms is contained in the above-mentioned range, the generation of fine powder of the resin pellets can be further suppressed.

The content of the saturated fatty acid amide having 20 or less carbon atoms is preferably 0.3% to 1.0% by mass, more preferably 0.3% to 0.8% by mass, and further preferably 0.3% to 0.5% by mass with respect to 100% by mass of the total amount of the erucic acid amide and the fatty acid amide having 20 or less carbon atoms. When the saturated fatty acid amide having 20 or less carbon atoms is contained in the above-mentioned range, the generation of fine powder of the resin pellets can be further suppressed.

Examples of the unsaturated fatty acid amide having 20 or less carbon atoms include a palmitoleic acid amide, a sapienic acid amide, an oleic acid amide, a linoleic acid amide, a gadoleic acid amide, and an eicosadienoic acid amide. Among these, as the unsaturated fatty acid amide, a mono-unsaturated fatty acid amide having one double bond is preferably contained, and one or more selected from an oleic acid amide and a gadoleic acid amide are preferably contained. Examples of the saturated fatty acid amide having 20 or less carbon atoms include a caprylic acid amide, a pelargonic acid amide, a decanoic acid amide, a palmitic acid amide, a stearic acid amide, and an arachidic acid amide. Among these, one or more selected from a decanoic acid amide, a palmitic acid amide, a stearic acid amide, and an arachidic acid amide are preferably contained.

When an oleic acid amide is contained as the unsaturated fatty acid amide having 20 or less carbon atoms, the content of the oleic acid amide is preferably 0.05% to 0.45% by mass, and more preferably 0.2% to 0.4% by mass with respect to 100% by mass of the total amount of the erucic acid amide and the fatty acid amide having 20 or less carbon atoms.

When a gadoleic acid amide is contained as the unsaturated fatty acid amide having 20 or less carbon atoms, the content of the gadoleic acid amide is preferably 0.5% to 5.0% by mass, more preferably 0.5% to 3.0% by mass, and further preferably 0.5% to 1.5% by mass with respect to 100% by mass of the total amount of the erucic acid amide and the fatty acid amide having 20 or less carbon atoms. The content of the gadoleic acid amide can be 0.8% to 2.0% by mass with respect to 100% by mass of the total amount of the erucic acid amide and the fatty acid amide having 20 or less carbon atoms as.

When the palmitic acid amide is contained as the saturated fatty acid amide having 20 or less carbon atoms, the content of the palmitic acid amide is preferably 0% to 0.15% by mass, and more preferably 0% to 0.1% by mass with respect to 100% by mass of the total amount of the erucic acid amide and the fatty acid amide having 20 or less carbon atoms. The content of the palmitic acid amide can be 0.01% to 0.1% by mass with respect to 100% by mass of the total amount of the erucic acid amide and the fatty acid amide having 20 or less carbon atoms. The content of the palmitic acid amide can be 0.1% by mass or less with respect to 100% by mass of the total amount of the erucic acid amide and the fatty acid amide having 20 or less carbon atoms. The pellet may not contain the palmitic acid amide.

When a stearic acid amide is contained as the saturated fatty acid amide having 20 or less carbon atoms, the content of the stearic acid amide is preferably 0% to 0.20% by mass, more preferably 0% to 0.15% by mass, and further preferably 0% to 0.10% by mass with respect to 100% by mass of the total amount of the erucic acid amide and the fatty acid amide having 20 or less carbon atoms. The content of the stearic acid amide can be 0.01% to 0.10% by mass with respect to 100% by mass of the total amount of the erucic acid amide and the fatty acid amide having 20 or less carbon atoms. The content of the stearic acid amide can be 0.1% by mass or less with respect to 100% by mass of the total amount of the erucic acid amide and the fatty acid amide having 20 or less carbon atoms.

When an arachidic acid amide is contained as the unsaturated fatty acid amide having 20 or less carbon atoms, the content of the arachidic acid amide is preferably 0.2% to 0.6% by mass, more preferably 0.2% to 0.5% by mass, and further preferably 0.3% to 0.4% by mass with respect to 100% by mass of the total amount of the erucic acid amide and the fatty acid amide having 20 or less carbon atoms.

(Fatty acid amide having 22 or more carbon atoms)

The polyolefin-based resin pellet according to the present embodiment may further contain a fatty acid amide having 22 or more carbon atoms other than an erucic acid amide, in addition to the erucic acid amide and the fatty acid amide having 20 or less carbon atoms. By incorporating the fatty acid amide having 22 or more carbon atoms other than an erucic acid amide, the sliding properties of the obtained film can be improved. As the fatty acid amide having 22 or more carbon atoms, the number of carbon atoms is preferably 22 to 24. The fatty acid amide having 22 or more carbon atoms other than an erucic acid amide may be one type or may be a plurality of types, and may be an unsaturated fatty acid amide or may be a saturated fatty acid amide. As the fatty acid amide having 22 or more carbon atoms other than an erucic acid, one or two or more selected from the group consisting of a behenic acid amide, a selacholeic acid amide, and a lignoceric acid amide are preferable.

(Other additives)

The polyolefin-based resin pellet according to the present embodiment may further contain an additive in addition to the polyolefin-based resin and the fatty acid amide mentioned above. Examples of such an additive include antioxidants, surfactants, weathering agents, antiblocking agents, antistatic agents, antifogging agents, drip-proof agents, pigments, and fillers. Furthermore, as the additive, a lubricant other than the above-mentioned fatty acid amide may be contained. The total content of the additives in the polyolefin-based resin pellet is preferably 1% by mass or less with respect to 100% by mass of the amount of the polyolefin-based resin contained in the resin pellet.

(Shape and the like of resin pellet)

The shape of the resin pellet according to the present embodiment is not particularly limited, but it may be angular, spherical, cylindrical, elliptical, or polygonal, and among these, the spherical shape is preferable because then the occurrence of chipping of the resin pellets is prevented, and the generation of fine powder is reduced. The term "spherical" herein includes not only a perfect spherical shape but also a substantially spherical shape, a substantially elliptical sphere shape, and a substantially rice granular shape.

The size of the resin pellets is not particularly limited, but the average short diameter of the resin pellets is preferably 1 to 7 mm from the viewpoint of preventing the occurrence of chipping of the resin pellets, and the molding processability of the resin pellets. The short diameter herein means the shortest diameter of the pellet. The average short diameter of the resin pellets is more preferably 1 to 5 mm, and further preferably 1.5 to 3.5 mm. Furthermore, the average long diameter of the resin pellets is preferably 3 to 10 mm from the same viewpoint. The long diameter herein means the longest diameter of the pellet. The average long diameter of the resin pellets is more preferably 3 to 8 mm, and further preferably 4 to 6 mm.

From the same viewpoint, the average weight of the resin pellets is preferably 30 to 100 mg, more preferably 30 to 80 mg, and further preferably 40 to 60 mg.

From the same viewpoint, the average volume of the resin pellets is preferably 30 to 100 $mm^3$, more preferably 30 to 80 $mm^3$, and further preferably 40 to 60 $mm^3$.

From the same viewpoint, the average surface area of the resin pellets is preferably 40 to 200 $mm^2$, more preferably 40 to 150 $mm^2$, and further preferably 60 to 100 $mm^2$.

(Usage of resin pellet)

In the resin pellet according to this embodiment, the generation of fine powder is reduced, and the subsequent molding processability becomes easy. The resin pellet according to the present embodiment can be molded into a molded product of a desired shape by a known molding method such as extrusion molding, injection molding, blow molding, compression molding, stretching, and vacuum molding, after mixing other arbitrary components as necessary. The molded product is not particularly limited, and examples thereof include films, sheets, laminated films, laminated sheets, laminated products, tubes, hoses, pipes, hollow containers, bottles, fibers, and components having various shapes.

<Method for producing resin pellet>

Subsequently, an example of a method for producing the above-mentioned resin pellet will be described. The above-mentioned resin pellet can be produced by a method including a step of mixing a polyolefin-based resin and a lubricant to obtain a mixture, and a step of melt-extruding the obtained mixture to obtain a resin pellet, for example.

As the polyolefin-based resin, the above-mentioned polyolefin-based resin can be used, and the lubricant to be mixed with the polyolefin-based resin contains the erucic acid amide and the fatty acid amide having 20 or less carbon atoms which are mentioned above, where 1% to 6% by mass of the lubricant can be used with respect to 100% by mass of the total amount of the erucic acid amide and the fatty acid amide having 20 or less carbon atoms.

In the step of mixing the polyolefin-based resin and the lubricant to obtain the mixture, the mixture of the polyolefin-based resin and the lubricant is obtained by supplying a certain amount of the polyolefin-based resin and the lubricant to an extruder by a feeder or the like, and mixing in the extruder, for example. As the extruder, a single-screw extruder, a twin-screw extruder, or the like can be used, for example.

In the extruder, the mixture of the polyolefin-based resin and the lubricant can be melt-kneaded, as necessary. The temperature of the melt-kneading is preferably 140°C to 300°C, and more preferably 140°C to 220°C.

When another component other than the polyolefin and the lubricant is blended in the resin pellet, the mixture may be formed by supplying the other component to the extruder to be mixed together with the polyolefin-based resin and the lubricant.

Subsequently, the obtained mixture is melt-extruded in a strand shape from a through-hole of a die plate.

Examples of the shape of the through-hole of the die plate include a circular shape, an elliptical shape, a polygonal shape, a star shape, a semi-circular shape, a semi-elliptical shape, and a rounded rectangle shape. Among these, the shape of the die hole is preferably circular or elliptical.

Extrusion conditions such as extrusion linear velocity, extrusion amount, and extrusion pressure of the mixture can be appropriately set.

The extruded strand-shaped mixture can be cooled to be solidified. A refrigerant such as water can be used for cooling. Cooling conditions such as the temperature of the refrigerant and the flow rate of the refrigerant can be appropriately set, and the degree of cooling may be such that the extruded mixture is solidified to the extent that it can be cut.

The pellets can be obtained by cutting the solidified strand-shaped mixture while cooling the mixture to solidify it together with performing the extrusion. For cutting, a cutter such as a rotary cutter can be used, for example.

The resin pellets obtained by cutting can be transferred to a post-step such as drying treatment, removal of foreign matter, and packaging, as necessary. The resin pellets can be transferred to a subsequent step through a pneumatic transfer line.

In the pneumatic transfer line, from the viewpoint of suppressing the generation of fine powder, it is preferable to transfer the resin pellets at the rate of 8 to 20 tons/hour, and it is more preferable to transfer the resin pellets at the rate of 8 to 12 tons/hour.

In the pneumatic transfer line, the fine powder generated from the resin pellets may be separated and removed by providing a pneumatic separation device for separating the resin pellets and the fine powder.

The resin pellet according to the present embodiment can also be produced by a method other than the above-mentioned embodiment.

[Examples]

<Example 1>

(Production of resin pellets)

80% by mass of an ethylene-1-butene-1-hexene copolymer (manufactured by Sumitomo Chemical Co., Ltd., SUMIKATHENE EP, melt flow rate: 1.0 g/10 minutes, density: 919 kg/m$^3$), 20% by mass of high-pressure-processed low-density polyethylene (manufactured by Sumitomo Chemical Co., Ltd., SUMIKATHENE, melt flow rate: 4.0 g/10 minutes, density: 923 kg/m$^3$), 600 mass ppm of a lubricant A having the composition shown in Table 1-1, 750 mass ppm of an antioxidant (manufactured by Sumitomo Chemical Co., Ltd., SUMILIZER GP), and 700 mass ppm of an antiblocking agent (manufactured by MIZUSAWA INDUSTRIAL CHEMICALS, LTD., SILTON JC-50) were mixed, and supplied to an extruder for melt kneading. The melt mixture was extruded from the through-hole of a die plate, and cut while being solidified with cooling water to produce rice granular resin pellets.

(Measurement of fine powder ratio)

The produced resin pellets were air-fed at the rate of 10 to 20 tons/hour via a knurling pipe for pneumatic transfer with the diameter of 10 inches. The pipe was equipped with a pneumatic separator for separating the pellets and fine powder. The pneumatic-transferred pellets were separated into pellets and fine powder again by a pneumatic separation device (Jet Separator CFS-150 manufactured by ACO Co., Ltd.), and the fine powder ratio was calculated by the following equation.

$$\text{Fine powder ratio (mass ppm)} = \text{fine powder mass/pellet mass}$$

(Molding of film)

Using an inflation film molding machine manufactured by Placo Co., Ltd. (full flight type screw single screw extruder (diameter 30 mmφ, L/D = 28), die (die diameter 50 mmφ, lip gap 0.8 mm), double slit air ring), the pellets before air feeding were formed into a film having the thickness of 50 μm under process conditions of the process temperature of 170°C, the extrusion amount of 5.5 kg/hour, the frost line distance (FLD) of 200 mm, and the blow ratio of 1.8. Regarding the sliding properties of the obtained film, the friction angle tan θ was measured by the following method.

(Measurement of friction angle tan θ (sliding properties))

Using a friction angle measuring instrument manufactured by Toyo Seiki Seisaku-sho, Ltd., a sample film of 160 mm (length) × 80 mm (width) was placed on an inclined plate, and a 1 kg sled of 100 mm (length) × 65 mm (width) having the bottom surface to which a sample film was attached was placed. The angle θ at which the sled started to move was measured at the inclination ascending rate of 2.7°/sec, and the value of tan θ was shown in Table 2. It is shown that the smaller the numerical value of tan θ, the better the sliding properties.

(Analysis of composition of lubricant)

Regarding the composition of the lubricant used in the production of the resin pellets, the mass ratio of each compound was measured by gas chromatography provided with a hydrogen flame ionization detector (FID), and shown in Table 1-1.

<Examples 2 to 4 and Comparative Example 1>

Resin pellets were produced in the same manner as in Example 1 except that a lubricant B (Example 2), a lubricant C (Example 3), a lubricant D (Example 4), a lubricant E (Comparative Example 1), a lubricant F (Example 5), and a lubricant G (Example 6), which had the compositions shown in Table 1-1 or Table 1-2, were used instead of the lubricant A, and films were formed from the resin pellets to perform the measurement of the fine powder ratio of each thereof and the measurement of the friction angle tan θ thereof.

[Table 1-1]

| Name of fatty acid amide | Number of carbon atoms | Double bond | Example 1 | Example 2 | Example 3 | Example 4 | Comparative Example 1 |
|---|---|---|---|---|---|---|---|
| | | | Lubricant A (% by mass) | Lubricant B (% by mass) | Lubricant C (% by mass) | Lubricant D (% by mass) | Lubricant E (% by mass) |
| Decanoic acid amide | 10 | 0 | 0.07 | N. D. | N. D. | N. D. | 0.05 |
| Palmitic acid amide | 16 | 0 | 0.05 | N. D. | N. D. | N. D. | 0.23 |
| Oleic acid amide | 18 | 1 | 0.23 | 0.3 | 0.4 | N. D. | 0.44 |
| Stearic acid amide | 18 | 0 | < 0.1 | < 0.1 | < 0.1 | N. D. | 0.22 |
| Gadoleic acid amide | 20 | 1 | 1.3 | 0.8 | 1.2 | 0.7 | 6.76 |
| Arachidic acid amide | 20 | 0 | 0.28 | 0.3 | 0.3 | 0.3 | 0.64 |
| Behenic acid amide | 22 | 0 | 0.8 | 2.5 | 2.4 | 1.5 | 0.58 |
| Selacholeic acid amide | 24 | 1 | 1.45 | 1.4 | 1.8 | 0.9 | 1.16 |
| Lignoceric acid amide | 24 | 0 | 0.42 | 0.3 | 0.4 | 0.2 | 0.29 |
| Other fatty acid amides | | | 0.77 | 3.2 | 0.9 | 0.9 | 0.61 |

(continued)

| Name of fatty acid amide | Number of carbon atoms | Double bond | Example 1 | Example 2 | Example 3 | Example 4 | Comparative Example 1 |
|---|---|---|---|---|---|---|---|
| | | | Lubricant A (% by mass) | Lubricant B (% by mass) | Lubricant C (% by mass) | Lubricant D (% by mass) | Lubricant E (% by mass) |
| a. Erucic acid amide | 22 | 1 | 94.61 | 91.2 | 92.6 | 94.7 | 89.02 |
| b. Total of fatty acid amide having 20 or less carbon atoms | | | 1.93 | 1.4 | 1.9 | 1.0 | 8.34 |
| c. Total of unsaturated fatty acid amide having 20 or less carbon atoms | | | 1.53 | 1.1 | 1.6 | 0.7 | 7.2 |
| d. Total of saturated fatty acid amide having 20 or less carbon atoms | | | 0.4 | 0.3 | 0.3 | 0.3 | 1.14 |
| b/(a + b) × 100 (%) | | | 2.00 | 1.51 | 2.01 | 1.04 | 8.57 |
| c/d | | | 3.83 | 3.67 | 5.33 | 2.33 | 6.32 |
| c/(a + b) × 100 (%) | | | 1.58 | 1.19 | 1.69 | 0.73 | 7.40 |
| d/(a + b) × 100 (%) | | | 0.41 | 0.32 | 0.32 | 0.31 | 1.17 |

[Table 1-2]

| Name of fatty acid amide | Number of carbon atoms | Double bond | Example 5 | Example 6 |
|---|---|---|---|---|
| | | | Lubricant F (% by mass) | Lubricant G (% by mass) |
| Decanoic acid amide | 10 | 0 | N. D. | N. D. |
| Palmitic acid amide | 16 | 0 | N. D. | N. D. |
| Oleic acid amide | 18 | 1 | 0.4 | 0.4 |
| Stearic acid amide | 18 | 0 | < 0.1 | < 0.1 |
| Gadoleic acid amide | 20 | 1 | 2.3 | 2.0 |
| Arachidic acid amide | 20 | 0 | 0.5 | 0.3 |
| Behenic acid amide | 22 | 0 | 1.8 | 1.4 |
| Selacholeic acid amide | 24 | 1 | 1.7 | 1.7 |
| Lignoceric acid amide | 24 | 0 | 0.4 | 0.3 |
| Other fatty acid amides | | | 2.3 | 2.3 |
| a. Erucic acid amide | 22 | 1 | 90.6 | 91.6 |
| b. Total of fatty acid amide having 20 or less carbon atoms | | | 3.2 | 2.7 |
| c. Total of unsaturated fatty acid amide having 20 or less carbon atoms | | | 2.7 | 2.4 |
| d. Total of saturated fatty acid amide having 20 or less carbon atoms | | | 0.5 | 0.3 |

(continued)

| Name of fatty acid amide | Number of carbon atoms | Double bond | Example 5 | Example 6 |
|---|---|---|---|---|
| | | | Lubricant F (% by mass) | Lubricant G (% by mass) |
| $b/(a + b) \times 100$ (%) | | | 3.4 | 2.9 |
| c/d | | | 5.40 | 8.00 |
| $c/(a + b) \times 100$ (%) | | | 2.88 | 2.55 |
| $d/(a + b) \times 100$ (%) | | | 0.53 | 0.32 |

For the columns described as "< 0.1" and "N. D." in Table 1-1 and Table 1-2, the numerical values of a to d were calculated with the numerical values as 0, and written in Table 1 -1 and Table 1-2.

[Table 2]

| | Lubricant type | Fine powder ratio (mass ppm) | Sliding properties of film (tan θ) |
|---|---|---|---|
| Example 1 | Lubricant A | 5 | 0.32 |
| Example 2 | Lubricant B | 4 | 0.32 |
| Example 3 | Lubricant C | 4 | 0.33 |
| Example 4 | Lubricant D | # | 0.36 |
| Example 5 | Lubricant F | 2 | 0.33 |
| Example 6 | Lubricant G | 2 | 0.33 |
| Comparative Example 1 | Lubricant E | 19 | - |

In Table 2, the fine powder ratio of Example 4 denoted by "#" was expected to be about the same as those of Examples 1 to 3.

As shown in Table 2, in the resin pellets of Examples 1 to 4, 5, and 6, the amount of fine powder generated from the resin pellets was small. On the other hand, in Example 2 that used the lubricant B in which the content of the fatty acid amide having 20 or less carbon atoms was higher than that of the lubricant D, the result in which the sliding properties of the film was superior to that of Example 4 that used the lubricant D was obtained.

**Claims**

1.    A polyolefin-based resin pellet comprising:

a polyolefin-based resin;
an erucic acid amide; and
a fatty acid amide having 20 or less carbon atoms,
wherein a content of the fatty acid amide having 20 or less carbon atoms is 1% to 6% by mass with respect to 100 % by mass of a total amount of the erucic acid amide and the fatty acid amide having 20 or less carbon atoms.

2.    The pellet according to claim 1, wherein the polyolefin-based resin is one or more selected from a polyethylene-based resin and a polypropylene-based resin.

3.    The pellet according to claim 1 or 2, wherein the fatty acid amide having 20 or less carbon atoms includes both an unsaturated fatty acid amide and a saturated fatty acid amide.

4.    The pellet according to claim 3, wherein a content of the unsaturated fatty acid amide contained in the fatty acid amide having 20 or less carbon atoms is 2 to 6 with respect to a content of the saturated fatty acid amide contained in the fatty acid amide having 20 or less carbon atoms.

5. The pellet according to any one of claims 1 to 4, wherein a content of an unsaturated fatty acid amide having 20 or less carbon atoms is 1.0% to 6.0% by mass with respect to 100 % by mass of the total amount of the erucic acid amide and the fatty acid amide having 20 or less carbon atoms.

6. The pellet according to any one of claims 3 to 5, wherein the unsaturated fatty acid amide is a mono-unsaturated fatty acid amide.

7. The pellet according to any one of claims 3 to 6, wherein the unsaturated fatty acid amide is one or more selected from an oleic acid amide and a gadoleic acid amide.

8. The pellet according to any one of claims 1 to 7, wherein a content of a saturated fatty acid amide having 20 or less carbon atoms is 0.3% to 1.0% by mass with respect to 100 % by mass of the total amount of the erucic acid amide and the fatty acid amide having 20 or less carbon atoms.

9. The pellet according to any one of claims 3 to 8, wherein the saturated fatty acid amide is one or two or more selected from the group consisting of a decanoic acid amide, a palmitic acid amide, a stearic acid amide, and an arachidic acid amide.

10. The pellet according to any one of claims 1 to 9, further comprising a fatty acid amide having 22 or more carbon atoms other than the erucic acid amide.

11. The pellet according to claim 10, wherein the fatty acid amide having 22 or more carbon atoms is one or two or more selected from the group consisting of a behenic acid amide, a selacholeic acid amide, and a lignoceric acid amide.

12. A method for producing the polyolefin-based resin pellet according to any one of claims 1 to 11, the method comprising:

mixing a polyolefin-based resin and a lubricant to obtain a mixture; and
melt-extruding the mixture to obtain a resin pellet,
wherein the lubricant contains an erucic acid amide, and a fatty acid amide having 20 or less carbon atoms, and a content of the fatty acid amide having 20 or less carbon atoms is 1% to 6% by mass with respect to 100 % by mass of a total amount of the erucic acid amide and the fatty acid amide having 20 or less carbon atoms.

## INTERNATIONAL SEARCH REPORT

| | International application No. |
|---|---|
| | PCT/JP2021/017703 |

**A. CLASSIFICATION OF SUBJECT MATTER**
C08J 3/12(2006.01)i; C08K 5/20(2006.01)i; C08L 23/00(2006.01)i
FI: C08J3/12 A CES; C08K5/20; C08L23/00

According to International Patent Classification (IPC) or to both national classification and IPC

**B. FIELDS SEARCHED**

Minimum documentation searched (classification system followed by classification symbols)
C08J3/00-3/28; C08K; C08L

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-221463 A (NIPPON FINE CHEMICAL CO., LTD.) 05 August 2003 (2003-08-05) entire text | 1-12 |
| A | JP 2005-:307122 A (ASAHI KASEI CHEMICALS CORP.) 04 November 2005 (2005-11-04) entire text | 1-12 |
| A | JP 61-281143 A (MITSUBISHI YUKA KABUSHIKI KAISHA) 11 December 1986 (1986-12-11) entire text | 1-12 |
| A | JP 6-1894 A (TONEN CHEMICAL CORPORATION) 11 January 1994 (1994-01-11) entire text | 1-12 |
| A | JP 2014-34614 A (SUMITOMO CHEMICAL CO., LTD.) 24 February 2014 (2014-02-24) entire text | 1-12 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July 2021 (08.07.2021) | 20 July 2021 (20.07.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/017703

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-121228 A (DAINICHISEIKA COLOR & CHEMICALS MFG. CO., LTD.) 07 July 2016 (2016-07-07) entire text | 1-12 |

Form PCT/ISA/210 (continuation of second sheet) (January 2015)

**INTERNATIONAL SEARCH REPORT**
Information on patent family members

International application No.

PCT/JP2021/017703

| Patent Documents referred in the Report | Publication Date | Patent Family | Publication Date |
|---|---|---|---|
| JP 2003-221463 A | 05 Aug. 2003 | GB 2386374 A<br>NL 1022492 A | |
| JP 2005-307122 A | 04 Nov. 2005 | (Family: none) | |
| JP 61-281143 A | 11 Dec. 1986 | (Family: none) | |
| JP 6-1894 A | 11 Jan. 1994 | (Family: none) | |
| JP 2014-34614 A | 24 Feb. 2014 | (Family: none) | |
| JP 2016-121228 A | 07 Jul. 2016 | (Family: none) | |

Form PCT/ISA/210 (patent family annex) (January 2015)

**EP 4 137 532 A1**

**Patent documents cited in the description**

- JP 2001072810 A